# EUROPEAN PATENT APPLICATION

(11) **EP 4 832 078 A1**
(43) Date of publication of application: **28.10.2026**
(21) Application number: 24907817.1
(22) Date of filing: 21.11.2024
(51) Int. Cl.: H01M 4/36, H01M 4/525, H01M 4/505, C01G 53/00, H01M 4/02

(54) **CATHODE ACTIVE MATERIAL FOR ALL-SOLID-STATE BATTERY AND METHOD OF MANUFACTURING SAME**

(30) Priority: 18.12.2023 KR 20230185173
(71) Applicant: POSCO Holdings Inc., Pohang-si, Gyeongsangbuk-do 37859 (KR)
(72) Inventor: MOON, Ji Woong, Pohang-si, Gyeongsangbuk-do 37859 (KR); LEE, Jae Myung, Pohang-si, Gyeongsangbuk-do 37859 (KR); PARK, Yooncheol, Pohang-si, Gyeongsangbuk-do 37859 (KR); NAM, Sang Cheol, Pohang-si, Gyeongsangbuk-do 37859 (KR); SONG, Jung Hoon, Pohang-si, Gyeongsangbuk-do 37859 (KR)
(74) Representative: Pfenning, Meinig & Partner mbB
(86) International application number: PCT/KR2024/018439
(87) International publication number: WO 2025/135532

(57) **Abstract**

The present invention relates to a positive electrode active material for an all-solid-state battery and a method for manufacturing the same. Specifically, the present invention relates to a positive electrode active material for an all-solid-state battery, in which residual lithium impurities are reduced and washing damage is recovered by first surface-treating a primarily calcined and washed lithium transition metal oxide using Co(OH)₂ and then secondarily surface-treating the same using LZO (Li₂ZrO₃) or LNO (LiNbO₃), and to a method for manufacturing the same.

## Description

### [TECHNICAL FIELD]

The present invention relates to a positive electrode active material for an all-solid-state battery and a method for manufacturing the same. Specifically, the present invention relates to a positive electrode active material for an all-solid-state battery, in which residual lithium impurities are reduced and washing damage is recovered by first surface-treating a primarily calcined and washed lithium transition metal oxide using Co(OH)₂ and then secondarily surface-treating the same using LZO (Li₂ZrO₃) or LNO (LiNbO₃), and to a method for manufacturing the same.

### [BACKGROUND ART]

Unlike a general lithium-ion battery using a liquid electrolyte, electrochemical characteristics of a positive electrode active material for an all-solid-state battery using solid powder as an electrolyte may vary depending on a surface contact interface between a positive electrode material and the electrolyte, surface reaction characteristics, and whether physical contact is maintained after expansion/contraction during charging and discharging.

In order to manufacture a positive electrode active material for an all-solid-state battery having excellent electrochemical characteristics, attempts have been made to reduce an average particle size of the positive electrode material, and in addition thereto, various studies have been attempted, such as controlling single crystal/polycrystalline structures, calcination temperature, surface coating materials, and surface coating methods.

In particular, many studies have also been attempted to treat a surface of a positive electrode active material using a washing solution in order to reduce residual lithium impurities, which are one of the main causes of deterioration of the positive electrode active material. In general, when distilled water is introduced as the washing solution, the effect of reducing residual lithium is excellent, but there is a problem in that it is difficult to prevent damage caused by washing from occurring on the surface of the positive electrode active material. Typically, during washing, lithium ions are easily eluted from the surface of an NCM positive electrode material, thereby lowering structural stability of the positive electrode active material, tending to decrease lifespan and capacity, and also causing a problem of increased resistance.

When residual lithium impurities on the surface of the positive electrode active material are not removed by washing, washing damage does not occur, but there is a problem in that C-rate characteristics are lowered due to resistance caused by a residual lithium layer.

Accordingly, there is a need for a positive electrode active material capable of improving structural stability by reducing washing damage on a surface and reducing residual lithium impurities that cause an increase in resistance, and for a method for manufacturing the same.

### [DETAILED DESCRIPTION OF THE INVENTION]

### [Technical Problem]

A technical problem to be solved by the present invention is to provide a positive electrode active material for an all-solid-state battery, characterized in that, instead of not undergoing a washing step after primary calcination, a lithium transition metal oxide is mixed with Co(OH)₂ and then heat-treated in a temperature range of 600°C to 700°C to perform first surface treatment, and thereafter secondarily coated on a surface using LZO (Li₂ZrO₃) or LNO (LiNbO₃).

Another technical problem to be solved by the present invention is to provide a method for manufacturing a positive electrode active material for an all-solid-state battery having the above-described advantages.

### [Technical Solution]

A positive electrode active material for an all-solid-state battery according to an embodiment of the present invention includes: a core including an NCM-based lithium transition metal oxide; a first coating layer containing a cobalt material and positioned on a surface of the core; and a second coating layer positioned on the first coating layer and containing at least one selected from LZO (Li₂ZrO₃) and LNO (LiNbO₃), wherein a content of Ni in the NCM-based lithium transition metal oxide is 80 mol% or more based on 100 mol% of a total amount of transition metals, and cobalt contained in the coating layer may include at least one of metallic cobalt and a cobalt compound.

A method for manufacturing a positive electrode active material for an all-solid-state battery according to another embodiment of the present invention includes: preparing a lithium transition metal oxide; forming a first coating layer by mixing the lithium transition metal oxide with Co(OH)₂ powder and then dry milling the mixture; second heat-treating the dry-milled mixture; and forming a second coating layer using a wet coating process after introducing an interface-protective coating material into the second heat-treated mixture, wherein the interface-protective coating material may include at least one selected from LZO (Li₂ZrO₃) and LNO (LiNbO₃).

### [Advantageous Effects]

A positive electrode active material for an all-solid-state battery according to an embodiment of the present invention can improve a phenomenon in which output performance of the positive electrode active material is reduced, while having no washing damage, by first surface-treating a lithium transition metal oxide that has not undergone washing step after a primary calcination using Co(OH)₂ and then secondarily surface-treating the same using LZO (Li₂ZrO₃) or LNO (LiNbO₃).

A method for manufacturing a positive electrode active material for an all-solid-state battery according to another embodiment of the present invention can provide a positive electrode active material having the above-described advantages.

### [BRIEF DESCRIPTION OF THE DRAWINGS]

FIG. 1 is a schematic view showing a method for manufacturing a positive electrode active material for an all-solid-state battery according to an embodiment of the present invention.
FIG. 2 is a flowchart showing a method for manufacturing a positive electrode active material for an all-solid-state battery according to an embodiment of the present invention.
FIG. 3 shows discharge capacity according to cycles of Examples and Comparative Examples of the present invention.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

Hereinafter, a positive electrode active material for an all-solid-state battery according to an embodiment of the present invention will be described.

The positive electrode active material for an all-solid-state battery according to an embodiment includes: a core including an NCM-based lithium transition metal oxide; a first coating layer containing a cobalt material and positioned on a surface of the core; and a second coating layer positioned on the first coating layer and containing at least one selected from LZO (Li₂ZrO₃) and LNO (LiNbO₃), wherein a content of Ni in the NCM-based lithium transition metal oxide is 80 mol% or more based on 100 mol% of a total amount of transition metals, and cobalt contained in the coating layer may include at least one of metallic cobalt and a cobalt compound.

When the content of Ni is included in the above-described range, energy density and capacity of the positive electrode active material may be high.

In the positive electrode active material for an all-solid-state battery according to an embodiment, a content of the first coating layer may be in a range of 1 mol% to 3 mol% based on the total number of moles of Ni, Co, and Mn elements constituting the positive electrode active material.

When the content of the first coating layer is included in the above-described range, safety and lifespan characteristics may be improved. However, when the content of the first coating layer is less than the lower limit of the above-described range, a Co(OH)₂ component that should participate in a reaction with residual lithium components such as LiOH and Li₂CO₃ present on the positive electrode surface is insufficient, and thus output characteristics may not be sufficiently improved. In addition, when the content of the first coating layer exceeds the upper limit of the above-described range, there is an advantage in that stability is improved because expensive Co is introduced in a large amount into the positive electrode active material, but there is a problem in that the price of the positive electrode active material rapidly increases, and thus it may not be suitable for commercialization.

In the positive electrode active material for an all-solid-state battery according to an embodiment, the first coating layer may include cobalt and a lithium compound distributed in an island shape.

The first coating layer may have a shape in which metallic cobalt or a cobalt compound is discontinuously distributed.

In the positive electrode active material for an all-solid-state battery according to an embodiment, a weight of the second coating layer may be in a range of 0.3 wt% to 3 wt% based on the total weight of the positive electrode active material.

When the weight of the second coating layer is included in the above-described range, stability and lifespan characteristics may be improved. However, when the weight of the second coating layer is less than the lower limit of the above-described range, an effect of preventing an interfacial reaction is insignificant, and side reactions easily occur, so that lifespan characteristics may be lowered. In addition, when the weight of the second coating layer exceeds the upper limit of the above-described range, the effect of preventing an interfacial reaction is excellent, but the coating layer acts as a resistance layer that interferes with insertion and deintercalation of lithium, and thus charge/discharge capacity may be reduced.

In the positive electrode active material for an all-solid-state battery according to an embodiment, a thickness of the second coating layer may be in a range of 5 nm to 20 nm.

When the thickness of the second coating layer is included in the above-described range, side reactions that may occur at an interface between the positive electrode material and the solid electrolyte can be prevented, thereby improving lifespan characteristics of the positive electrode active material. When the thickness of the second coating layer is less than the lower limit of the above-described range, a surface of the positive electrode active material that is not covered and the solid electrolyte are in direct contact with each other, causing side reactions with the solid electrolyte, whereby degradation of the interface between the NCM positive electrode material and the solid electrolyte occurs, and the lifespan of the positive electrode active material continuously decreases. When the thickness of the second coating layer exceeds the upper limit of the above-described range, the coating layer becomes excessively thick, and insertion and deintercalation of lithium ions are not smooth, so that capacity may be difficult to sufficiently express.

Hereinafter, a method for manufacturing a positive electrode active material for an all-solid-state battery according to another embodiment of the present invention will be described.

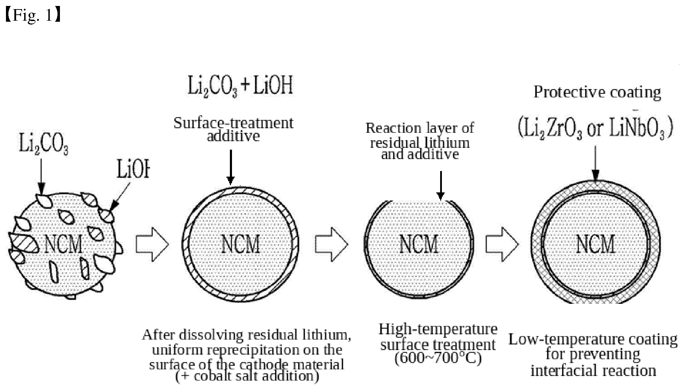

FIG. 1 is a schematic view showing a method for manufacturing a positive electrode active material for an all-solid-state battery according to an embodiment of the present invention.

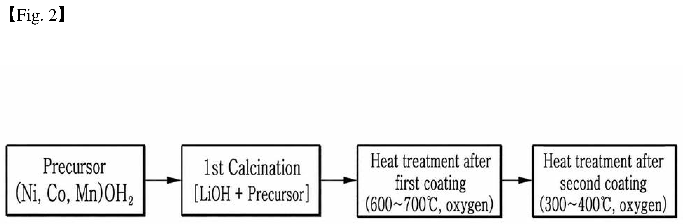

FIG. 2 is a flowchart showing a method for manufacturing a positive electrode active material for an all-solid-state battery according to an embodiment of the present invention.

Referring to FIGS. 1 and 2, the method for manufacturing a positive electrode active material for an all-solid-state battery according to another embodiment includes: preparing a lithium transition metal oxide; forming a first coating layer by mixing the lithium transition metal oxide with Co(OH)₂ powder and then dry milling the mixture; second heat-treating the dry-milled mixture; and forming a second coating layer using a wet coating process after introducing an interface-protective coating material into the second heat-treated mixture, wherein the interface-protective coating material may include at least one selected from LZO (Li₂ZrO₃) and LNO (LiNbO₃).

In the first coating layer forming step of the method for manufacturing a positive electrode active material for an all-solid-state battery according to another embodiment, a molar ratio of Co(OH)₂ to the total number of moles of transition metals constituting the lithium transition metal oxide mixed therein may be in a range of 1 mol% to 3 mol%.

When the molar ratio of the Co(OH)₂ powder to the total number of moles of transition metals constituting the lithium transition metal oxide satisfies the above-described range, residual lithium impurities remaining on a surface of the lithium transition metal oxide can be effectively removed, and an effect of recovering damage caused by washing can also be maximized. However, when the molar ratio of the Co(OH)₂ powder to the total number of moles of transition metals constituting the lithium transition metal oxide is not included in the above-described range, Co(OH)₂ elements capable of participating in a reaction with residual lithium are insufficient, and thus an output improvement phenomenon may not appear. In particular, when an excessively large amount of Co is introduced, not only does the manufacturing cost of the positive electrode material increase, but contact between the surface of the positive electrode material and the solid electrolyte is hindered, so that capacity may rather be reduced.

In the first coating layer forming step of the method for manufacturing a positive electrode active material for an all-solid-state battery according to another embodiment, a dry milling performance time may be 10 minutes to 30 minutes.

When the dry milling performance time is included in the above-described range, residual lithium impurities remaining on the surface of the lithium transition metal oxide can be effectively removed, and an effect of recovering damage caused by washing can also be maximized. However, when the dry milling performance time is not included in the above-described range, residual lithium impurities are not removed or washing damage is not completely recovered, which may sharply reduce lifespan characteristics of a cell due to occurrence of side reactions or deterioration in the positive electrode active material.

In the second heat-treating step of the method for manufacturing a positive electrode active material for an all-solid-state battery according to another embodiment, a heat treatment temperature may be 600°C to 700°C.

In the second coating layer forming step of the method for manufacturing a positive electrode active material for an all-solid-state battery according to another embodiment, a weight of the interface-protective coating material may be in a range of 0.3 wt% to 3 wt% based on the total weight of the second heat-treated mixture.

### [MODE FOR CARRYING OUT THE INVENTION]

Hereinafter, Examples, Comparative Examples, and Experimental Examples of the present invention will be described. However, the following Examples are only preferred embodiments of the present invention, and the present invention is not limited by the following Examples. In addition, various modifications may be made and practiced within the scope of the claims, the detailed description of the invention, and the accompanying drawings, and such modifications may also fall within the scope of the present invention.

### <Example 1>

### (1) Primary Calcination Step

A transition metal hydroxide precursor Ni₀.₈₈Co₀.₀₉₅Mn₀.₀₂₅(OH)₂ having an average particle diameter of 4 µm and LiOH·H₂O as a lithium raw material were mixed at a molar ratio of 1:1.03 to form a mixture. 1 kg of the mixture was charged into a tube furnace, and the temperature was raised at a temperature increase rate of 2.5°C/min. After a calcination temperature of 700°C and a holding time of 10 hours were maintained, the temperature was lowered at a temperature decrease rate of 2.5°C/min. During calcination, pure O₂ was supplied so that an O₂ concentration of 99% or more could be maintained, thereby forming a first lithium transition metal oxide Ni₀.₈₈Co₀.₀₉₅Mn₀.₀₂₅O₂ having an average particle diameter (D50) of 4 µm to 5 µm.

### (2) First Coating Layer Forming Step

The first lithium transition metal oxide prepared by the primary calcination was mixed with Co(OH)₂ powder corresponding to 2 mol% of the total number of moles of transition metal constituent elements of Ni₀.₈₈Co₀.₀₉₅Mn₀.₀₂₅O₂ by a dry mixing process. Thereafter, heat treatment was performed at 650°C for 5 hours in an oxygen atmosphere to react Co(OH)₂ with a residual lithium layer on a surface of Ni₀.₈₈Co₀.₀₉₅Mn₀.₀₂₅O₂, which is the first lithium transition metal oxide, thereby forming a first coating layer.

### (3) Interface-Protective Coating Layer (Second Coating Layer) Forming Step

The first coating layer coated on all or part of a surface of the second lithium metal oxide was formed as follows: after the second lithium metal oxide was dissolved in dehydrated ethanol, zirconium(IV) tetrapropoxide (70 wt% in 1-propanol) was added in an amount such that a molar ratio of second lithium metal oxide:zirconium ions was 2:1, and stirring was performed to prepare a coating solution containing lithium ions and zirconium ions. At this time, the concentration of zirconium ions in the coating solution was 0.1 mol/L.

A coating process was performed by spraying 400 mL of the second coating solution onto 1 kg of the formed second lithium metal oxide using a fluidized coating apparatus (MP-01, POWREX). Operating conditions of the fluidized coating apparatus were intake gas (nitrogen), intake gas temperature (80°C), intake gas flow rate (0.3 m³/h), rotation speed (400 rpm), and coating solution spray rate (10 mL/min), and spraying was performed for a total of 40 minutes. Thereafter, the lithium transition metal oxide sprayed with the second coating solution was charged into a saggar and then heat-treated at 300°C while oxygen was supplied into a box-type electric furnace, thereby manufacturing a positive electrode active material in which an amorphous Li₂ZrO₃ coating layer was formed as an interface-protective coating layer on a surface of the lithium transition metal oxide.

### <Comparative Example 1>

A positive electrode active material was manufactured under the same conditions as in Example 1, except that the interface-protective coating layer forming step was immediately performed after primary calcination while excluding the first coating layer forming step.

### Experimental Example 1 - Evaluation of Electrochemical Characteristics

### (1) Manufacture of All-Solid-State Battery for Evaluation

70 wt% of the manufactured positive electrode active material, 29 wt% of an argyrodite solid electrolyte, and 1 wt% of C65 as a conductive material were well mixed to prepare mixed powder. The argyrodite solid electrolyte serving as a separator was first charged in a predetermined amount into a jig for evaluating an all-solid-state battery, and then pressurized at 300 MPa or more so as to have a thickness of about 100 µm. Then, 10 mg of the positive electrode active material mixed powder was placed on one surface and secondarily pressurized to manufacture a positive electrode portion. Thereafter, a Li-In alloy was placed on the other surface, and an appropriate pressure was applied to manufacture a battery for evaluating an all-solid-state battery.

### (2) Evaluation of Charge/Discharge Characteristics of All-Solid-State Battery for Evaluation

The manufactured all-solid-state battery cell for evaluation was mounted on a charger/discharger, and charge/discharge characteristics were evaluated at 30°C. Charging was performed by a constant current-constant voltage method, and discharging was performed by a constant current method. A charge end voltage was set to 3.63 V, and a discharge end voltage was set to 1.9 V.

Discharge capacity was determined as an average of three measurements for each C-rate up to 0.1 C, 0.2 C, 0.33 C, 0.5 C, 1.0 C, and 2.0 C. From 0.1 C to 0.5 C, charge and discharge current densities were set to be the same in the constant current section, and at 1.0 C and 2.0 C, the charge current density was set to 0.5 C. Since constant current-constant voltage charging was performed, the charge end current was set to a current of 0.02 C at 0.1 C, and under other conditions, the charge end current was set to 20% of the current during constant current charging. As the initial capacity, the first cycle at 0.1 C was adopted, and as output characteristics, an average value of three discharge capacities for each C-rate was applied. The rest time between charging and discharging of each cycle was set to 20 minutes.

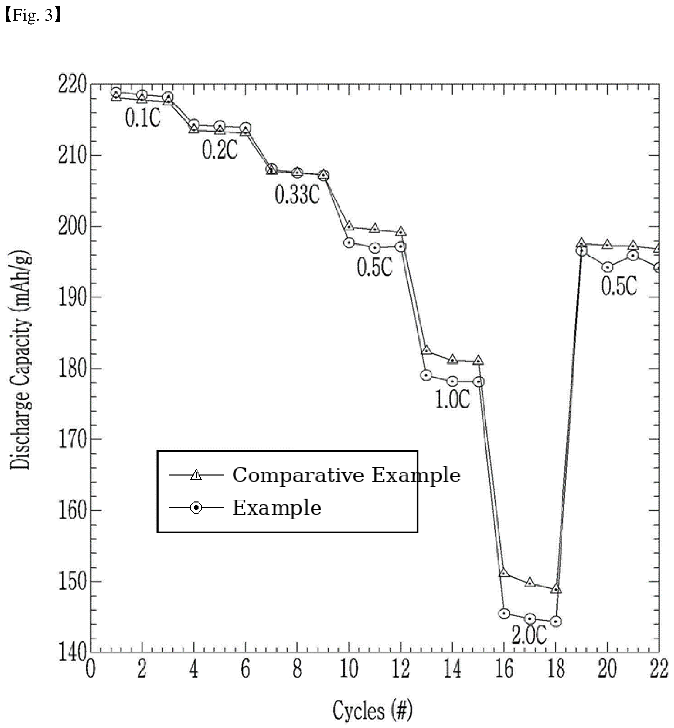

FIG. 3 shows discharge capacity according to cycles of Examples and Comparative Examples of the present invention.

As shown in Table 1 below and FIG. 3, since the positive electrode material base material and the interface-protective coating layer were the same, initial characteristics were almost similar. However, in a high-output region of 0.5 C to 2.0 C, it can be confirmed that the positive electrode material for an all-solid-state battery manufactured according to the Example had a high over-discharge capacity due to an effect in which lithium carbonate and lithium hydroxide remaining on the surface of the positive electrode material after primary calcination reacted with Co(OH)₂, thereby reducing the content and resistance thereof.

**[Table 1]**

| **Classification** | **0.1C Initial Charge Capacity (mAh/g)** | **0.1C Initial Discharge Capacity (mAh/g)** | **0.1C Initial Coulombic Efficiency (%)** | **0.1C Average Discharge Capacity (mAh/g)** | **0.1C Average Discharge Capacity (mAh/g)** | **0.1C Average Discharge Capacity (mAh/g)** | **0.1C Average Discharge Capacity (mAh/g)** | **0.1C Average Discharge Capacity (mAh/g)** | **0.1C Average Discharge Capacity (mAh/g)** |
|---|---|---|---|---|---|---|---|---|---|
| **Comparative Example 1** | 228.2 | 218.9 | 95.9 | 218.6 | 214.1 | 207.5 | 197.3 | 178.5 | 145.0 |
| **Example 1** | 227.2 | 218.2 | 96.0 | 217.9 | 213.4 | 207.5 | 199.6 | 181.6 | 150.0 |

## Claims

1. A positive electrode active material for an all-solid-state battery, comprising:
a core comprising an NCM-based lithium transition metal oxide;
a first coating layer containing a cobalt material and positioned on a surface of the core;
and
a second coating layer positioned on the first coating layer and containing at least one selected from LZO (Li₂ZrO₃) and LNO (LiNbO₃),
wherein a content of Ni in the NCM-based lithium transition metal oxide is 80 mol% or more based on 100 mol% of a total amount of transition metals, and
wherein cobalt contained in the coating layer comprises at least one of metallic cobalt and a cobalt compound.

2. The positive electrode active material for an all-solid-state battery of claim 1,
wherein a content of the first coating layer is in a range of 1 mol% to 3 mol% based on a total number of moles of Ni, Co, and Mn elements constituting the positive electrode active material.

3. The positive electrode active material for an all-solid-state battery of claim 1,
wherein the first coating layer comprises cobalt and a lithium compound distributed in an island shape.

4. The positive electrode active material for an all-solid-state battery of claim 1,
wherein a weight of the second coating layer is in a range of 0.3 wt% to 3 wt% based on a total weight of the positive electrode active material.

5. The positive electrode active material for an all-solid-state battery of claim 1,
wherein a thickness of the second coating layer is in a range of 5 nm to 20 nm.

6. A method for manufacturing a positive electrode active material for an all-solid-state battery, comprising:
preparing a lithium transition metal oxide;
forming a first coating layer by mixing the lithium transition metal oxide with Co(OH)₂ powder and then dry milling the mixture;
second heat-treating the dry-milled mixture; and
forming a second coating layer using a wet coating process after introducing an interface-protective coating material into the second heat-treated mixture,
wherein the interface-protective coating material comprises at least one selected from LZO (Li₂ZrO₃) and LNO (LiNbO₃).

7. The method for manufacturing a positive electrode active material for an all-solid-state battery of claim 6,
wherein, in forming the first coating layer, a molar ratio of Co(OH)₂ to a total number of moles of transition metals constituting the lithium transition metal oxide mixed therein is in a range of 1 mol% to 3 mol%.

8. The method for manufacturing a positive electrode active material for an all-solid-state battery of claim 6,
wherein, in forming the first coating layer, a dry milling performance time is 10 minutes to 30 minutes.

9. The method for manufacturing a positive electrode active material for an all-solid-state battery of claim 6,
wherein, in second heat-treating, a heat treatment temperature is 600°C to 700°C.

10. The method for manufacturing a positive electrode active material for an all-solid-state battery of claim 6,
wherein, in forming the second coating layer, a weight of the interface-protective coating material is in a range of 0.3 wt% to 3 wt% based on a total weight of the second heat-treated mixture.
